Europäisches Patentamt

European Patent Office

Office européen des brevets

(11) Publication number: **0 431 213 A1**

## EUROPEAN PATENT APPLICATION

(21) Application number: **89122679.7**

(22) Date of filing: **08.12.89**

(51) Int. Cl.⁵: **G02B 1/04**, C08J 7/12, G02C 7/04

(43) Date of publication of application:
**12.06.91 Bulletin 91/24**

(84) Designated Contracting States:
**DE FR GB IT**

(71) Applicant: **CESKOSLOVENSKA AKADEMIE VED**
**Narodni 3**
**Praha 1(CS)**

(72) Inventor: **Sulc, Jiri, Dipl.-Ing. CSc.**
**Na pekné vyhlidce 4**
**Praha 6(CS)**
Inventor: **Krcova, Zuzana, Dipl.-Ing.**
**Cechova 26**
**Praha 7(CS)**

(74) Representative: **Patentanwälte Beetz sen. - Beetz jun. Timpe - Siegfried - Schmitt-Fumian**
**Steinsdorfstrasse 10**
**W-8000 München 22(DE)**

(54) Lenses from polymeric derivatives of acrylic and methacrylic acides.

(57) The invention relates to contact and intraocular lenses made from a non-hydrophilic acrylate and/or methacrylate polymer or copolymer comprising a hydrophilic surface layer of controlled thickness produced by a partial hydrolysis of sulfonation in such a way that the swelling degree continuously changes from its maximum at very surface to a minimum in the non-swelling core unaffected by hydrophilization. In this way, light reflex formation is avoided or at least substantially reduced as well as the tendency to the surface growth of cells, irritation of neighbouring living tissues, and the formation of pressure necroses.

Strong inorganic acids are most suitable for surface hydrolysis. Their ability to swell and dissolve the polymer matrix can be arbitrarily limited by dilution with water and/or addition of inert, soluble salts.

The hydrophilic surface layer may be crosslinked by simultaneous esterification with multifunctional alcohols.

# LENSES FROM POLYMERIC DERIVATIVES OF ACRYLIC AND METHACRYLIC ACIDES

The invention pertains to lenses from polymeric derivatives of acrylic acid and methacrylic acid, in particular to lenses which are used in an aqueous medium, for example, as contact or intraocular lenses, and which were originally non-hydrophilic and have been hydrophilized.

Polymeric derivatives of acrylic and methacrylic acid in the sense of the invention are polymers and copolymers, the carboxylic side groups of which are transformed into non-hydrophilic groups, in particular ester, thioester, nitrile, N-substituted amide or hydrazide, and anhydride groups. The decisive characteristic by which these lenses differ from known hydrogel lenses is their non-hydrophilicity, i.e., their inability to physically absorb more than 1 % water in permanent contact with water or an aqueous medium. Non-hydrophilic plastics are not wetted or poorly wetted with water, and their surface is usually much harder than the surface of the cornea and other tissues of living organs, in particular of the human eye. They are used in the manufacturing of lenses mainly for their excellent optical properties, particularly their high transparency and refractive index of light, and also for the relatively good biological compatibility to living tissues and body liquids, and for their excellent stability in an organism. Their good workability is also advantageous.

Most of the lenses presently used are made of materials such as poly(methyl methacrylate) and, to a lesser extent, of copolymers of methyl methacrylate with other esters of methacrylic acid or acrylic acid. The supporting parts serving for fixation and centering of the proper lens are sometimes made from other polymers, for example, from poly(propylene), poly(vinyl ether), and others.

Beside of the good properties mentioned above, however, these lenses have also other, less advantageous feature. Their main drawback is, above all, their above-mentioned relatively high hardness, which may cause, under unfavourable conditions, irritation and pressure necroses. Further inconvenient properties are the tendency to produce light reflexes and foreign body reactions, and the risk of formation of non-transparent layers of cells which may considerably deteriorate the originally excellent optical properties after a longer period of time.

It has been already proposed a surface saponification of hydrogel lenses from lightly crosslinked poly(hydroxyethyl methacrylate) with alkaline hydroxides in the presence of a salt, the aqueous solutions of which do not swell this synthetic hydrogel (DE-A-38 00 529). The presence of salts reduces the depth of the swelling gradient which is undesirable in this case. However, hydrophilization is not concerned in this case, because the hydrogels are always hydrophilic as such.

The thickness of the more swelling surface layer must not be too large, not only for the above-mentioned undesirable decrease of the refractive index, but also with respect to the mechanical resistance, and, above all, the tear resistance (resistance against tearing and further propagation of cracks from the edge) strongly decreases with the increasing swelling capacity.

On the other hand, the formation of light reflexes is insignificant in swollen hydrogel lenses, because the difference of the refractive indices of the swollen lens and of the surrounding water medium is only small. The properties of the known hard lenses, e.g. made from poly(methyl methacrylate), are extremely different from those of hydrogel lenses, and accordingly, also preparation and processing of these materials cannot be brought into a correlation.

It is the object of the invention to provide lenses from non-hydrophilic polymeric derivatives of acrylic acid and methacrylic acid having a transparent hydrophilic layer on their surface, and a method for their preparation.

The above object is achieved according to the claims. The dependent claims relate to preferred embodiments.

The lenses according to the present invention are made of a non-hydrophilic acrylate and/or methacrylate, particularly methyl methacrylate and/or ethyl acrylate, and are provided with a transparent hydrophilic surface layer by hydrophilization, the swelling degree of which in an aqueous medium continuously decreases in the direction from the surface to the unswollen core which is unaffected by hydrophilization. The surface layer is hydrophilized in such a way, that it exhibits a marked swelling gradient with maximum swelling at the surface. In this way reflexes are avoided, because the higher the difference of the refractive indices at the interface of lens and surrounding medium is, the stronger is the reflex formation. This difference is reduced to a minimum by swelling with a gradient.

The lenses of the present invention can be stored in preferably sterilized physiological saline.

A further advantage of the lenses according to the invention is the reduced growth of cells on their surface because cells are practically not deposited on the soft, highly swollen elastic surface.

Hard lenses from poly(methyl methacrylate) and similar materials can be very easily worked, and the attained smoothness of the surface is much better as compared with lenses prepared by polymerization casting. But even the smallest unevennesses which cannot be removed by polishing are eliminated by the formation of a swelling layer directly from the material of the lens. In other words, a perfect smoothness of surface is obtained by the hydrophilization according to the invention which is not possible by mere mechanical processing.

Also maximal biocompatibility is attained at the same time because the specific pressure of supporting parts on neighbouring living tissues is reduced and the surface layer is elastic and soft. This effect is also obtained when the thickness of the surface layer is small.

The method of the present invention for preparing these lenses consists in the partial hydrolysis of the raw lens material on the basis of the above-defined polymer materials with an acid the ability of which to swell and dissolve the non-hydrophilic acrylate and/or methacrylate polymer used is limited by dilution with water and/or addition of an inert soluble salt, subsequent neutralization and washing.

The partial hydrophilization can also be carried out by saponification with a base, preferably a strong base particularly inorganic base. An alternative method for preparing these lenses by surface hydrophilization consists in the sulfonation, eventually subsequent neutralization and washing.

The resulting lenses hydrolyzed from the surface are then stored in physiological saline.

The use of a strong inorganic acid is preferred.

Provided the hydrophilization agent, for example, an inorganic acid, is concentrated enough to strongly swell or even dissolve the polymer from which the lens is made, swelling and solubility can be reduced in a manner known as much by addition of an inert soluble salt to the hydrophilization agent in a suitable concentration. Suitable soluble salts for acids are e.g. alkaline salts of the same acid.

If the hydrophilization is carried out by saponification with a strong base, this provision is not necessary in contrast to hydrogel lenses, because the non-hydrophilic polymeric derivatives of acrylic acid and methacrylic acid constituting the lens matrix neither swell nor dissolve in aqueous alkaline solutions. The saponification proceeds in this case layer by layer, and the resulting product is soluble in water and in the alkaline solution concerned if whole molecules of the polymer are saponified. Although the swelling can be increased by addition of a suitable solvent, hydrophilization with a strong inorganic acid, such as sulfuric, nitric or phosphoric acid, is more advantageous in this respect. The thickness of the resulting hydrophilic layer then depends on the swelling degree of the polymer in the hydrophilization agent.

During the hydrophilization with a strong acid, e.g. sulfuric acid, the surface layer may be cross-slinked, reinforced and stabilized by known methods, e.g. by addition of a multifunctional alcohol, such as glycerol, diethylene glycol or tripropylene glycol, i.e. of such a polyol in the molecule of which remains at least one hydrophilic group, for example, a hydroxy, ether, or acetal group, after esterification of its two or more hydroxy groups.

Swelling of the polymer in the acid used may be lowered to the required value also by diluting the acid, in particular sulfuric acid, with water or also by decreasing the temperature with prolonged action of the reagent, or by properly selecting the hydrolysis time at constant temperature.

Also other reactions than hydrolysis can be employed for the hydrophilization of surface layers, for example, sulfonation with vapours of sulfur trioxide or other known sulfonation reagents.

With the swelling gradient or continuously decreasing swelling as mentioned it is understood that between the minimum and maximum values of the swelling degree do not exist abrupt transitions which, on the other hand, could occur if the change of the swelling degree is obtained by gradual application of layers of the same or another partly or completely hydrolyzed or sulfonated polymer having gradually different swelling capacity.

The continuously decreasing swelling degree usually does not have a linear characteristic due to the fact that the diffusion of reagent into the polymer has a definite velocity and, consequently, the duration of its action is dependent on the depth and accordingly is different in different layers. Moreover, the concentrations of reagent and side reaction products also vary during the reaction. Fortunately, suitable reaction conditions may be easily empirically determined.

The invention is further illustrated by means of the following examples.

## Example 1

An intraocular lens made from poly(methyl methacrylate), designated for insertion into the lens capsule after removal of the original natural lens afflicted with cataract and provided with side supporting elements in the shape of two opposite 0.12 mm thick and twice regularly cranked projections from the same material, was immersed for 1 min into a saturated solution of sodium hydrogen sulfate in 80 % sulfuric acid heated to 80 °C. Then it was rapidly neutralized by dipping into 5 % aqueous solution of sodium hydrogencarbonate of 50 °C for 15 min thoroughly washed in deionized water. In this way a thin layer was produced on the surface, which was lustrous in the wet state and had a swelling capacity in physiological saline changing from zero to 90 % in the direction from the unaffected core to the surface of the lens.

This lens can be stored in a sterile 0,8 % solution of sodium chloride in distilled water.

**Example 2**

The experiment according to Example 1 was repeated with the exception that 5 vol.-% of triethylene glycol was added to the hydrophilization agent. The prepared hydrophilic surface layer was by approx. 50 % thicker than the layer obtained in Example 1, had the same wear resistance, and had a lower friction coefficient in water.

**Example 3**

The lens described in Example 1 was immersed for 2 min into 66 % sulfuric acid of 95 °C. The further processing was as described in Example 1.

**Example 4**

The lens according to Example 1 was immersed for 15 min into 55 % nitric acid of 40 °C in which sodium nitrate was dissolved almost to saturation before use. Neutralization and washing were carried out in the same way as in Example 1, but at 70 °C.

**Claims**

1. Contact and intraocular lenses made of a non-hydrophilic acrylate and/or methacrylate polymer or copolymer, preferably methyl methacrylate and/or ethyl acrylate,
**characterized** in that
they comprise a transparent hydrophilic layer obtained by hydrophilization, the swelling degree of which in an aqueous medium continuously decreases in the direction from the surface to the non-swelling core unaffected by hydrophilization.

2. The lenses according to claim 1, characterized in that the hydrophilic surface layer is crosslinked.

3. The lenses according to claims 1 and 2, characterized in that the hydrophilic surface layer is crosslinked with an esterified multifunctional alcohol, comprising, in addition to ester-bonded hydroxy groups, at least one further free hydrophilic group.

4. A method for preparing the lenses according to claims 1 to 3, characterized by partial hydrolysis of a non-hydrophilic acrylate and/or methacrylate polymer or copolymer with a hydrophilization agent.

5. The method of claim 4, characterized by the use of an acid, preferably a strong acid, as hydrophilization agent, the ability of which to swell and dissolve the non-hydrophilic polymer is limited by dilution with water, and/or addition of soluble inert salts, following neutralization after hydrophilization and washing.

6. The method according to claims 4 and 5, characterized by crosslinking, reinforcing and/or stabilizing during hydrophilization.

7. The method according to claim 6, characterized in that one or more multifunctional alcohols, preferably glycerol, diethylene glycol or tripropylene glycol, and/or one or more polyols having at least one free hydrophilic group in the molecule are added to the hydrophilization agent.

8. The method according to claims 4, 6 and 7, characterized by the use of a base, preferably a strong base, as hydrophilization agent, eventually following neutralization after hydrophilization and washing.

9. The method according to claim 4, characterized by the use of a sulfonation agent as hydrophilization agent.

10. The method according to claim 9, characterized by the use of sulphur trioxide vapour as sulfonation agent, neutralization after hydrophilization and washing.

11. The method according to claims 4 to 7, characterized in that sulphuric acid, nitric acid and/or phosphoric acid are used as strong acids.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 155 553 (CESKOSLOVENSKA AKADEMIE) * Claims 1-4; page 1, lines 18-40; page 2, lines 1-38; page 3, lines 3-33 * | 1-11 | G 02 B 1/04 C 08 J 7/12 G 02 C 7/04 |
| X | EP-A-0 068 800 (JAPAN SYNTHETIC RUBBER) * Claims 1,2,3,4,10-36; page 3, lines 5-11; page 14, lines 20-21; page 15, lines 1-20; page 16, lines 13-16 * | 1-11 | |
| X | WO-A-8 904 330 (IOPTEX) * Claims 1,11,27,36,37; page 8, whole page * | 1 | |
| X | GB-A-2 213 489 (CESKOSLOVENSKA AKADEMIE) * Claims 1-8; page 5, paragraph 1 * | 1-11 | |
| Y | | 1 | |
| D,Y | DE-A-3 800 529 (CESKOSLOVENSKA AKADEMIE) * Claims 1-10 * | 1 | TECHNICAL FIELDS SEARCHED (Int. Cl.5) |
| A | US-A-4 569 858 (D. LIM) * Claims 1,4,5,6; column 2, lines 20-23,50-68 * | 1 | G 02 B C 08 J B 29 D |
| A | FR-A-2 091 532 (HYDROPHILICS INT.) * Claim 1 * | 1 | |
| A | US-A-4 655 770 (A. GUPTA) * Claim 1 * | 1 | |

The present search report has been drawn up for all claims

| Place of search | Date of completion of the search | Examiner |
|---|---|---|
| THE HAGUE | 03-08-1990 | DEPIJPER R.D.C. |

EPO FORM 1503 03.82 (P0401)